# EUROPEAN PATENT SPECIFICATION

(11) **EP 3 277 982 B1**
(45) Date of publication and mention of the grant of the patent: **30.12.2020**
(21) Application number: 16773899.6
(22) Date of filing: 28.03.2016
(51) Int. Cl.: F16H 48/40, F16H 48/12, F16H 48/08

(54) **CROSS-SHAFT FOR THREE PINION DIFFERENTIAL**
QUERWELLE FÜR DIFFERENTIAL MIT DREI RITZELN
ARBRE TRANSVERSAL POUR DIFFÉRENTIEL À TROIS PIGNONS

(30) Priority: 03.04.2015 IN 955DE2015
(43) Date of publication of application: 07.02.2018
(73) Proprietor: Eaton Intelligent Power Limited, Dublin 4 (IE)
(72) Inventor: WADHVA, Ashish, Varthur Bandalore 560087 (IN)
(74) Representative: BRP Renaud & Partner mbB Rechtsanwälte Patentanwälte Steuerberater
(86) International application number: PCT/US2016/024433
(87) International publication number: WO 2016/160657

(56) References cited:
- EP-A1- 1 555 459
- WO-A1-2004/076891
- JP-A- 2012 145 206
- US-A- 5 507 702
- US-A1- 2004 157 696
- US-A1- 2004 157 696
- US-A1- 2005 070 394
- US-A1- 2014 141 921
- US-A1- 2014 141 921

## Description

### FIELD

The present invention relates generally to differential gear assemblies and more particularly to a cross-shaft configuration for a three pinion differential.

### BACKGROUND

A differential gear mechanism can be provided in an axle assembly and used to transfer torque from a driveshaft to a pair of output shafts. The driveshaft can drive the differential through the use of a bevel gear that meshes with a ring gear mounted to a housing of the differential, in automotive applications, a differential allows the tires mounted at either end of the axle assembly to rotate at different speeds. This is important when the vehicle is turning because the outer tire travels over an arc of greater distance than the inner fire. Thus, the outer tire must rotate at a faster speed than the inner tire to compensate for the greater distance of travel. The differential includes a differential case and a gear arrangement that allows torque to be transferred from the driveshaft to the output shafts while concurrently allowing the output shafts to rotate at different speeds as needed. The gear arrangement can generally include a pair of side gears that are mounted for rotation with the respective output shafts. A series of cross-pins or pinion gear shafts are fixedly mounted to the differential case for rotation therewith. A corresponding plurality of pinion gears are mounted for rotation with the pinion gear shafts and are in meshing relationship with both of the side gears.

Some differential gear mechanisms include traction modifying differentials. Typically, a clutch pack can be disposed between one of the side gears and an adjacent surface of the differential case. The clutch pack or locking mechanism is operable to limit relative rotation between the gear case and the one side gear. In such differentials, engaging the clutch pack or locking mechanism (retarding differentiation) is achieved by one of several different approaches. Some configurations include a piston that actuates to cause the clutch pack to move between open, locked and partially locked conditions.

In WO 2004/0796891 A1 there is disclosed a differential gear mechanism as it is defined in the pre-characterizing portion of claim 1.

The background description provided herein is for the purpose of generally presenting the context of the invention. Work of the presently named inventors, to the extent it is described in this background section, as well as aspects of the description that may not otherwise qualify as prior art at the time of filing, are neither expressly nor impliedly admitted as prior art against the present invention.

### SUMMARY

The present invention is a differential gear mechanism as it is defined in claim 1.

Further embodiments of the differential gear mechanism of the present invention are defined in the dependent claims.

### BRIEF DESCRIPTION OF THE DRAWINGS

The present invention will become more fully understood from the detailed description and the accompanying drawings, wherein:
FIG. 1 is cross sectional view of a differential gear mechanism having a three pinion configuration and constructed in accordance to one example of the present disclosure;
FIG. 2 is transverse cross sectional view taken from a cross-shaft hole center line;
FIG. 3 is sectional view of the differential case of the differential gear mechanism of FIG. 1;
FIG. 4 is a side view of the differential case of FIG. 3;
FIG. 5 is a perspective view of a cross-shaft of the differential gear mechanism of FIG. 1; and
FIG. 6 is a perspective view of a center block of the differential gear mechanism of FIG. 1.

### DETAILED DESCRIPTION

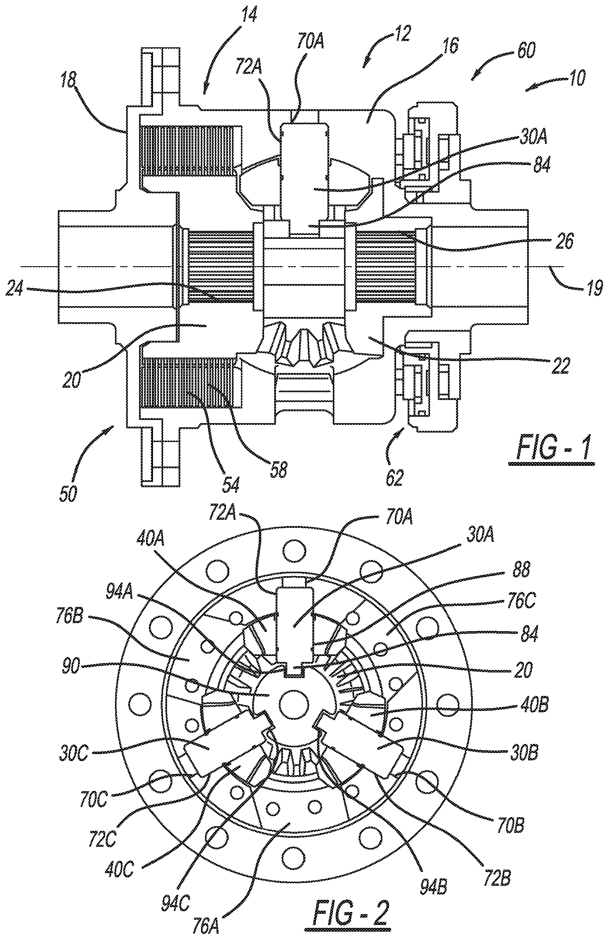

With initial reference to FIGS. 1 and 2, a limited slip differential assembly constructed in accordance to one embodiment of the present invention is shown and generally identified at reference numeral 10. The limited slip differential assembly 10 can include a differential gear assembly or mechanism 12 and a clutch assembly 14. The differential gear mechanism 12 includes a differential case 16 and a differential cover portion 18. The limited slip differential assembly 10 operates to drive a pair of axle shafts that are connected to drive wheels (not specifically shown). In general, the limited slip differential assembly 10 functions as a traditional open differential during normal operating conditions until an event occurs where a bias torque is required. When a loss in traction is detected or anticipated, the clutch assembly 14 can be selectively actuated in order to generate the optimum bias ratio for the situation. The differential case is configured to rotate around an axis of rotation 19.

The differential gear assembly 12 includes a pair of side gears 20 and 22 that are mounted for rotation with the axle shafts (and first and second drive wheels), respectively. The side gears 20 and 22 define first and second axle shaft openings 24 and 26 (FIG. 2). Three cross-pins or cross-shafts 30A, 30B and 30C are fixedly mounted to the first differential case portion 16 for rotation therewith. The cross-pins or cross-shafts 30A, 30B and 30C can also be referred to in the art as pinion gear shafts. A corresponding three pinion gears 40A, 40B and 40C are mounted for rotation with the cross-shafts 30A, 30B and 30C and are in meshing relationship with both of the side gears 20 and 22. In an open configuration, described more fully below, the differential gear assembly 12 acts to allow the axle shafts to rotate at different speeds.

The clutch assembly 14 can include a clutch pack 50 and a clutch actuator 52. The clutch pack 50 includes a plurality of annular plates 54 interleaved between a plurality of annular friction disks 58. The plurality of annular plates 54 can be coupled for rotation with one of the differential case 16 and the differential gear assembly 12. The plurality of annular friction disks 58 can be coupled for rotation with the other one of the differential case 16 and the differential gear assembly 12. In the illustrated example, the plurality of annular plates 54 are coupled for rotation to the differential case 16 (e.g., splined to an inner diameter of the differential case 16) and the plurality of annular friction disks 58 are coupled for rotation with the differential gear assembly 12 (e.g., splined to an outer diameter of the side gear 20). It will be appreciated that the annular friction disks 58 may be supported for rotation by either of the side gears 20 or 22, or both. It is further appreciated that the clutch assembly 14 may be configured differently. It will further be appreciated that the differential gear assembly 12 may be provided without a clutch assembly.

The plurality of annular plates 54 and annular friction disks 58 are interleaved between one another and act to rotate past one another in substantially non-contacting relationship when the clutch assembly 14 is in its open position. However, it will be appreciated by those skilled in the art that the term "non-contacting" as used herein is relative and is not meant to necessarily indicate that the annular plates 54 and annular friction disks 58 have absolutely no contact when the clutch assembly 14 is in the open condition.

The annular plates 54 and annular friction disks 58 are axially movable into frictional engagement relative to one another, thereby reducing relative rotation between the annular plates 54 and annular friction disks 58 when the clutch assembly 14 is in the closed or partially closed configurations. In this manner, when the clutch assembly 14 is in its closed position, the side gears 20 and 22, as well as the axle shafts and the drive wheels rotate together.

The clutch assembly 14 can operate in an open configuration to allow the side gears 20 and 22 to rotate independently from each other, e.g., at different speeds. The clutch assembly 14 can also operate in a closed or partially closed configuration where the side gears 20 and 22 rotate together or partially together (that is, not independently), e.g., at substantially the same speed. The clutch assembly 14 can, for example, be a hydraulic clutch assembly 60 that utilizes pressurized hydraulic fluid that can act on a piston 62 to selectively actuate the clutch pack 50 between the open, closed and partially closed configurations.

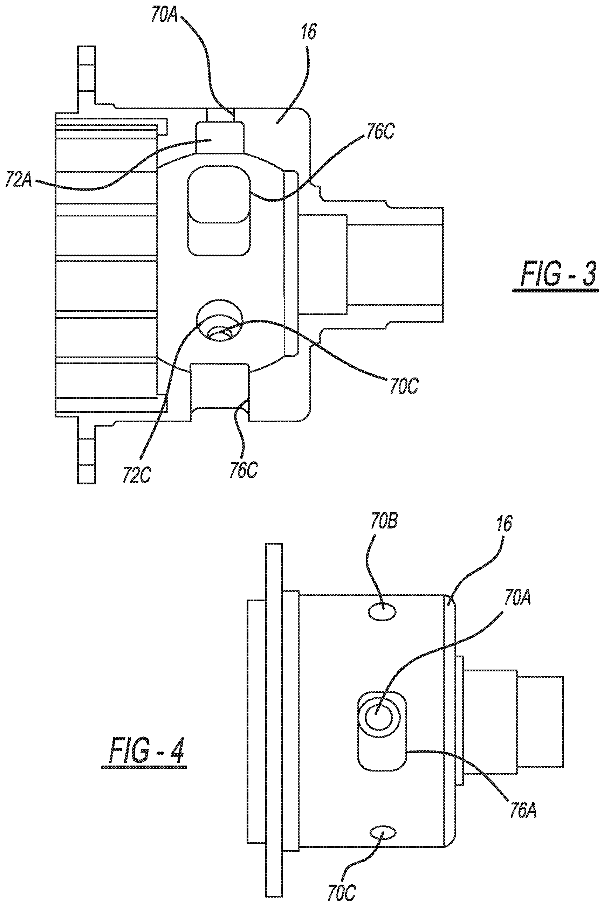

With additional reference now to FIGS. 3-6, additional features of the differential gear assembly 12 will be described. The differential case 16 defines a series of holes 70A, 70B and 70C (FIG. 2) formed therethrough. In the example shown, there is a hole for each of the cross-pins 30. Each hole 70A, 70B and 70C further includes a counterbore 72A, 72B and 72C respectively. The counterbores 72A, 72B and 72C have a larger diameter than the holes 70A, 70B and 70C. As will become appreciated, the counterbores 72A, 72B and 72C are configured to receive the respective cross-pins 30A, 30B and 30C and act as a load transfer surface. Further, the transition from the counterbores 72A, 72B and 72C to the holes 70A, 70B and 70C can trap oil inside of the differential case 16 due to centrifugal forces. The holes 70A, 70B and 70C can be an oil path for a journal bearing.

The differential case 16 further defines a series of windows 76A, 76B and 76C (FIGS. 3 and 4). The windows 76A, 76B and 76C can be located generally at diametrically opposed locations relative to a corresponding series of holes 70A, 70B and 70C. In the example shown, the respective windows 76A, 76B and 76C can be used as an access to the internal cavity of the differential case 16 by a tool when forming the counterbores 72A, 72B and 72C. While the windows 76A, 76B and 76C are shown having a generally rectangular shape, other configurations are contemplated.

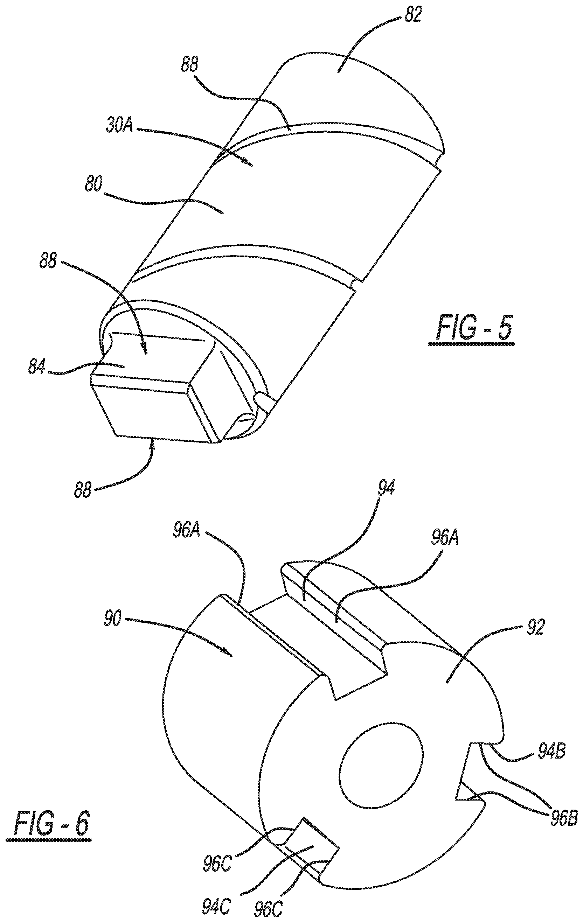

With particular reference now to FIG. 5, a cross-pin 30A will be described in greater detail. It will be appreciated that the other cross-pins 30B and 30C can be configured similarly. The cross-pin 30A includes a cylindrical pin body 80 that extends between a first end 82 and a second end 84. The cylindrical pin body 80 has a spiral groove 88 formed thereon for oil retention and to maintain an oil film between the pinion gear 40A and the cross-pin 30A. The oil film will minimize friction during relative motion between the pinion gear 40A and the cross-pin 30A. The second end 84 can have a generally rectangular geometry including first parallel sides 88. The first parallel sides 88 can be suitable for mating in a non-rotatable keyed relationship with a center block 90.

With reference now to FIG. 6, the center block 90 generally includes a cylindrical block body 92 having a series of locating features 94A, 94B and 94C formed thereon. The locating features 94A, 94B and 94C are in the form of slots that extend a length of the cylindrical block body 92. The locating features 94A, 94B and 94C can each be defined in part by opposing side walls 96A, 96B and 96C. The locating features 94A, 94B and 94C are configured to slidingly receive and oppose the second end 84 of the respective cross-pins 30A, 30B and 30C (see also FIG. 2) in a nested position. The second ends 84 are slidingly received by the locating features 94A, 94B and 94C. The center block 90 can be sandwiched between the side gears 20 and 22 and generally retained therebetween. Assembly can be accomplished by slidably passing the center block 90 into location against the side gear 22 while locating the respective second ends 84 along the locating features 94A, 94B and 94C of the center block 90.

The locating features 94A, 94B and 94C prevent rotation of the cross-pins 30A, 30B and 30C as the second ends 84 (see FIG. 5) are keyed into the respective locating features 94A, 94B and 94C. In addition, the respective ends 84 keep the center block 90 from rotating. As the degree of freedom in the rotational direction has been restricted, deflection of the cross-pins 30A, 30B and 30C is limited to a desired value. This will inhibit the cross-shaft contact at the transition between the holes 70A, 70b and 70C and counterbores 72A, 72B and 72C under load such that the respective cross-pins 30A, 30B and 30C are constrained from rotating. Furthermore, the cross-pins 30A, 30B and 30C are supported at both ends.

If the center block 90 and cross-pins 30A, 30B and 30C were one solid unit, the differential gear assembly 12 could not be assembled. Explained further, the case 16 would need to be split such as at the cross-shaft centerline. As a result, extra fasteners would also be required to hold the two separate halves of the case together. In addition, it would be difficult to install the clutch pack 50. By providing a loose center block 90 and three distinct cross-pins 30A, 30B and 30C, along with the counterbores 72A, 72B and 72C, the differential gear assembly 12 can be assembled from the open end on the flange side (see for example the view seen from FIG. 2). Three pinions for higher torque capacity can be incorporated with the instant design as compared to a two pinion design having one larger cross-pin.

The foregoing description of the embodiments has been provided for purposes of illustration and description. It is not intended to be exhaustive or to limit the invention. Individual elements or features of a particular embodiment are generally not limited to that particular embodiment, as far as they fall within the scope of protection defined by the appended claims.

## Claims

1. A differential gear mechanism (12) comprising:
a differential case (16) defining first, second and third counterbores (72A, 72B, 72C) formed therearound, the differential case rotating around an axis of rotation (19);
a first and a second side gear (20, 22) rotatably mounted within the differential case (16), the first and second side gears being co-axially aligned along the axis of rotation (19);
a first, second and third pinion gear (40A, 40B 40C) mounted between the first and second side gears (20, 22), each of the first, second and third pinion gears being rotatably mounted on a respective cross-pin (30A, 30B, 30C), each cross-pin having a cylindrical pin body (80) that extends between first and second ends (82, 84), the first, second and third pinion gears intermeshing with the first and second side gears to form a torque transfer arrangement configured for transferring torque between the pinion gears and the first and second side gears to rotate the first and second side gears about the axis of rotation;
**characterized in that** the differential gear mechanism (12) further comprises:
a center block (90) having a cylindrical block body (92) that defines a first, second and third locating feature (94A, 94B, 94C) thereon, the center block disposed between the first and second side gears (20, 22); and
wherein each first end of a respective cross-pin (30A, 30B, 30C) is received by a corresponding counterbore (72A, 72B, 72C) of the differential case (16) and each second end (84) is received by a corresponding locating feature (94A, 94B, 94C) of the center block (90), wherein the locating features (94A, 94B, 94C) in the center block (90) are each defined in part by opposing side walls (96A, 96B, 96C) that oppose the respective second ends (84) of the cross-pins (30A, 30B, 30C) in a keyed relationship.

2. The differential gear mechanism of claim 1 wherein the first, second and third locating feature (94A, 94B, 94C) comprises first, second and third slots formed into the cylindrical block body (92).

3. The differential gear mechanism of claim 1 wherein the differential case (16) further defines first, second and third holes (70A, 70B, 70C) coaxially arranged relative to the respective first, second and third counterbores (72A, 72B, 72C).

4. The differential gear mechanism of claim 1 wherein the torque transfer arrangement is configured for allowing the first and second side gears (20, 22) to rotate at different rotational speeds with respect to one another about the axis of rotation (19).

5. The differential gear mechanism of claim 4, wherein:
the differential case (16) defines first, second and third holes (70A, 70B, 70C) and corresponding first, second and third counterbores formed therearound; and
the center block having a cylindrical block body that defines a first, second and third slot thereon.

6. The differential gear mechanism of claim 1 or 5 wherein each cylindrical pin (80) body has a spiral groove (88) formed thereon.

7. The differential gear mechanism of claim 3 or 5 wherein the differential case (16) further defines a first, a second and a third window (76A, 76B, 76C) positioned at a diametrically opposed location from a corresponding first, second and third hole (70A, 70B, 70C) in the differential case.

8. The differential gear mechanism of claim 7 when dependent on claim 5 wherein the first, second and third windows (76A, 76B, 76C) are configured to allow tool access to the differential case (16) during formation of the respective first, second and third counterbores (72A, 72B, 72C).

9. The differential gear mechanism of claim 6 wherein the slots in the center block (90) are each defined in part by opposing side walls (96A, 96B, 96C) that oppose the respective second ends (84) of the cross-pins (30A, 30B, 30C).

10. The differential gear mechanism of claim 5 wherein the cross-pins are keyed to the center block (90) at the respective slots.

11. The differential gear mechanism of claim 1 or 5 wherein the center block (90) is retained between the side gears (20, 22).

12. The differential gear mechanism of claim 2 or 5 wherein the respective slots each extend a length of the cylindrical block body (92).

13. The differential gear mechanism of claim 3 or 5 wherein each of the first, second and third holes (70A, 70B, 70C) extend through an outer surface of the differential case (16).

14. The differential gear mechanism of claim 5 wherein each respective second end (84) has a generally rectangular geometry.

## Patentansprüche

1. Differentialgetriebemechanismus (12), umfassend:
ein Differentialgehäuse (16), das eine erste, zweite und dritte Senkbohrung (72A, 72B, 72C) definiert, die um dieses herum ausgebildet sind, wobei sich das Differentialgehäuse um eine Rotationsachse (19) dreht;
ein erstes und ein zweites Kegelrad (20, 22), die drehbar innerhalb des Differentialgehäuses (16) montiert sind, wobei das erste und das zweite Kegelrad koaxial entlang der Rotationsachse (19) ausgerichtet sind;
ein erstes, zweites und drittes Ritzel (40A, 40B, 40C), die zwischen dem ersten und zweiten Kegelrad (20, 22) montiert sind, wobei jedes vom ersten, zweiten und dritten Ritzel drehbar auf einem jeweiligen Querbolzen (30A, 30B, 30C) montiert ist, wobei jeder Querbolzen einen zylindrischen Bolzenkörper (80) aufweist, der sich zwischen einem ersten und zweiten Ende (82, 84) erstreckt, wobei das erste, zweite und dritte Ritzel mit dem ersten und dem zweiten Kegelrad ineinander greifen, um eine Drehmomentübertragungsanordnung zu bilden, die zum Übertragen von Drehmoment zwischen den Ritzeln und dem ersten und zweiten Kegelrad konfiguriert ist, um das erste und zweite Kegelrad um die Rotationsachse zu drehen;
**dadurch gekennzeichnet, dass** der
Differentialgetriebemechanismus (12) ferner umfasst:
einen Mittelblock (90) mit einem zylindrischen Blockkörper (92), der ein erstes, zweites und drittes Positionierungsmerkmal (94A, 94B, 94C) darauf definiert, wobei der Mittelblock zwischen dem ersten und zweiten Kegelrad (20, 22) angeordnet ist; und
wobei jedes erste Ende eines jeweiligen Querbolzens (30A, 30B, 30C) von einer entsprechenden Senkbohrung (72A, 72B, 72C) des Differentialgehäuses (16) aufgenommen wird und jedes zweite Ende (84) von einem entsprechenden Positionierungsmerkmal (94A, 94B, 94C) des Mittelblocks (90) aufgenommen wird, wobei die Positionierungsmerkmale (94A, 94B, 94C) in dem Mittelblock (90) jeweils teilweise durch gegenüberliegende Seitenwände (96A, 96B, 96C) definiert sind, die den jeweiligen zweiten Enden (84) der Querbolzen (30A, 30B, 30C) in einer formschlüssigen Beziehung gegenüberliegen.

2. Differentialgetriebemechanismus nach Anspruch 1, wobei das erste, zweite und dritte Positionierungsmerkmal (94A, 94B, 94C) einen ersten, zweiten und dritten Schlitz umfasst, die in dem zylindrischen Blockkörper (92) ausgebildet sind.

3. Differentialgetriebemechanismus nach Anspruch 1, wobei das Differentialgehäuse (16) ferner ein erstes, zweites und drittes Loch (70A, 70B, 70C) definiert, die koaxial relativ zu der jeweiligen ersten, zweiten und dritten Senkbohrung (72A, 72B, 72C) angeordnet sind.

4. Differentialgetriebemechanismus nach Anspruch 1, wobei die Drehmomentübertragungsanordnung dazu konfiguriert ist zu ermöglichen, dass sich das erste und das zweite Kegelrad (20, 22) mit unterschiedlichen Drehzahlen in Bezug zueinander um die Rotationsachse (19) drehen.

5. Differentialgetriebemechanismus nach Anspruch 4, wobei:
das Differentialgehäuse (16) ein erstes, zweites und drittes Loch (70A, 70B, 70C) und eine entsprechende erste, zweite und dritte Senkbohrung, die um diese herum ausgebildet sind, definiert; und
wobei der Mittelblock einen zylindrischen Blockkörper aufweist, der einen ersten, zweiten und dritten Schlitz darauf definiert.

6. Differentialgetriebemechanismus nach Anspruch 1 oder 5, wobei jeder zylindrische Bolzenkörper (80) eine daran ausgebildete Spiralnut (88) aufweist.

7. Differentialgetriebemechanismus nach Anspruch 3 oder 5, wobei das Differentialgehäuse (16) ferner ein erstes, ein zweites und ein drittes Fenster (76A, 76B, 76C) definiert, die an einer diametral gegenüberliegenden Stelle von einem entsprechenden ersten, zweiten und dritten Loch (70A, 70B, 70C) in dem Differentialgehäuse positioniert sind.

8. Differentialgetriebemechanismus nach Anspruch 7, wenn abhängig von Anspruch 5, wobei das erste, zweite und dritte Fenster (76A, 76B, 76C) dazu konfiguriert sind, Werkzeugzugriff auf das Differentialgehäuse (16) während der Bildung der jeweiligen ersten, zweiten und dritten Senkbohrung (72A, 72B, 72C) zu ermöglichen.

9. Differentialgetriebemechanismus nach Anspruch 6, wobei die Schlitze in dem Mittelblock (90) jeweils teilweise durch gegenüberliegende Seitenwände (96A, 96B, 96C) definiert sind, die den jeweiligen zweiten Enden (84) der Querbolzen (30A, 30B, 30C) gegenüberliegen.

10. Differentialgetriebemechanismus nach Anspruch 5, wobei die Querbolzen mit dem Mittelblock (90) an den jeweiligen Schlitzen formschlüssig verbunden sind.

11. Differentialgetriebemechanismus nach Anspruch 1 oder 5, wobei der Mittelblock (90) zwischen den Kegelrädern (20, 22) gehalten wird.

12. Differentialgetriebemechanismus nach Anspruch 2 oder 5, wobei sich die jeweiligen Schlitze jeweils über eine Länge des zylindrischen Blockkörpers (92) erstrecken.

13. Differentialgetriebemechanismus nach Anspruch 3 oder 5, wobei sich jedes der ersten, zweiten und dritten Löcher (70A, 70B, 70C) durch eine Außenfläche des Differentialgehäuses (16) erstreckt.

14. Differentialgetriebemechanismus nach Anspruch 5, wobei jedes jeweilige zweite Ende (84) eine im Allgemeinen rechteckige Geometrie aufweist.

## Revendications

1. Mécanisme d'engrenage différentiel (12) comprenant :
un carter de différentiel (16) définissant des premier, deuxième et troisième contre-alésages (72A, 72B, 72C) formés autour de celui-ci, le carter de différentiel tournant autour d'un axe de rotation (19) ;
un premier et un deuxième engrenage latéral (20, 22) montés rotatifs à l'intérieur du carter de différentiel (16), les premier et deuxième engrenages latéraux étant alignés coaxialement le long de l'axe de rotation (19) ;
un premier, un deuxième et un troisième pignon d'engrenage (40A, 40B 40C) montés entre les premier et deuxième engrenages latéraux (20, 22), chacun des premier, deuxième et troisième pignons d'engrenage étant monté rotatif sur une broche transversale respective (30A, 30B, 30C), chaque broche transversale ayant un corps de broche cylindrique (80) qui s'étend entre des première et deuxième extrémités (82, 84), les premier, deuxième et troisième pignons d'engrenage s'engrenant avec les premier et deuxième engrenages latéraux pour former un agencement de transfert de couple configuré pour transférer un couple entre les pignons d'engrenage et les premier et deuxième engrenages latéraux pour faire tourner les premier et deuxième engrenages latéraux autour de l'axe de rotation ;
**caractérisé en ce que** le mécanisme d'engrenage différentiel (12) comprend en outre :
un bloc central (90) ayant un corps de bloc cylindrique (92) qui définit une première, une deuxième et une troisième caractéristique de positionnement (94A, 94B, 94C) sur celui-ci, le bloc central disposé entre les premier et deuxième engrenages latéraux (20, 22) ; et
dans lequel chaque première extrémité d'une broche transversale respective (30A, 30B, 30C) est reçue par un contre-alésage correspondant (72A, 72B, 72C) du carter de différentiel (16) et chaque deuxième extrémité (84) est reçue par une caractéristique de localisation correspondante (94A, 94B, 94C) du bloc central (90), dans lequel les caractéristiques de localisation (94A, 94B, 94C) dans le bloc central (90) sont chacune définies en partie par des parois latérales opposées (96A, 96B, 96C) qui s'opposent aux deuxièmes extrémités respectives (84) des broches transversales (30A, 30B, 30C) dans une relation clavetée.

2. Mécanisme d'engrenage différentiel selon la revendication 1 dans lequel la première, la deuxième et la troisième caractéristique de localisation (94A, 94B, 94C) comprennent des première, deuxième et troisième encoches formées dans le corps de bloc cylindrique (92).

3. Mécanisme d'engrenage différentiel selon la revendication 1 dans lequel le carter de différentiel (16) définit en outre des premier, deuxième et troisième trous (70A, 70B, 70C) agencés coaxialement par rapport aux premier, deuxième et troisième contre-alésages respectifs (72A, 72B, 72C).

4. Mécanisme d'engrenage différentiel selon la revendication 1 dans lequel l'agencement de transfert de couple est configuré pour permettre aux premier et deuxième engrenages latéraux (20, 22) de tourner à des vitesses de rotation différentes les uns par rapport aux autres autour de l'axe de rotation (19).

5. Mécanisme d'engrenage différentiel selon la revendication 4, dans lequel :
le carter de différentiel (16) définit des premier, deuxième et troisième trous (70A, 70B, 70C) et des premier, deuxième et troisième contre-alésages correspondants formés autour de ceux-ci ; et
le bloc central ayant un corps de bloc cylindrique qui définit une première, une deuxième et une troisième encoche sur celui-ci.

6. Mécanisme d'engrenage différentiel selon la revendication 1 ou 5 dans lequel chaque corps de broche cylindrique (80) a une rainure en spirale (88) formée sur celui-ci.

7. Mécanisme d'engrenage différentiel selon la revendication 3 ou 5 dans lequel le carter de différentiel (16) définit en outre une première, une deuxième et une troisième fenêtre (76A, 76B, 76C) positionnées au niveau d'une localisation diamétralement opposée par rapport à un premier, un deuxième et un troisième trou (70A, 70B, 70C) correspondants dans le carter de différentiel.

8. Mécanisme d'engrenage différentiel selon la revendication 7 prise en dépendance de la revendication 5 dans lequel les première, deuxième et troisième fenêtres (76A, 76B, 76C) sont configurées pour permettre un accès par un outil au carter de différentiel (16) pendant la formation des premier, deuxième et troisième contre-alésages respectifs (72A, 72B, 72C).

9. Mécanisme d'engrenage différentiel selon la revendication 6 dans lequel les encoches dans le bloc central (90) sont chacune définies en partie par des parois latérales opposées (96A, 96B, 96C) qui s'opposent aux deuxièmes extrémités respectives (84) des broches transversales (30A, 30B, 30C).

10. Mécanisme d'engrenage différentiel selon la revendication 5 dans lequel les broches transversales sont clavetées au bloc central (90) au niveau des encoches respectives.

11. Mécanisme d'engrenage différentiel selon la revendication 1 ou 5 dans lequel le bloc central (90) est retenu entre les engrenages latéraux (20, 22).

12. Mécanisme d'engrenage différentiel selon la revendication 2 ou 5 dans lequel les encoches respectives s'étendent chacune sur une longueur du corps de bloc cylindrique (92).

13. Mécanisme d'engrenage différentiel selon la revendication 3 ou 5 dans lequel chacun des premier, deuxième et troisième trous (70A, 70B, 70C) s'étend à travers une surface externe du carter de différentiel (16).

14. Mécanisme d'engrenage différentiel selon la revendication 5 dans lequel chaque deuxième extrémité respective (84) a une géométrie généralement rectangulaire.
